# EUROPEAN PATENT SPECIFICATION

(11) **EP 3 040 820 B1**
(45) Date of publication and mention of the grant of the patent: **26.06.2019**
(21) Application number: 14840926.1
(22) Date of filing: 05.08.2014
(51) Int. Cl.: G06F 3/0488, G06F 3/0486, G06F 3/0484, G06F 3/041, G06F 3/14

(54) **CONTENT PLAYBACK APPARATUS AND CONTENT PLAYING METHOD**
INHALTSWIEDERGABEVORRICHTUNG UND INHALTSWIEDERGABEVERFAHREN
APPAREIL DE REPRODUCTION DE CONTENU ET PROCÉDÉ DE REPRODUCTION DE CONTENU

(30) Priority: 29.08.2013 KR 20130103252
(43) Date of publication of application: 06.07.2016
(73) Proprietor: Pixtree Technologies Inc., Seoul 152-766 (KR); SK TELECOM CO., LTD., Seoul 04539 (KR)
(72) Inventor: SHIN, Jae Seob, Seoul 121-767 (KR); RYOO, Sun Gul, Seoul 139-923 (KR); SON, Se Hoon, Seoul 150-771 (KR); PARK, Kwang Woo, Seoul 152-841 (KR); HWANG, In Suk, Seoul 120-861 (KR)
(74) Representative: Isarpatent
(86) International application number: PCT/KR2014/007199
(87) International publication number: WO 2015/030383

(56) References cited:
- WO-A1-2013/035725
- KR-A- 20120 116 996
- KR-A- 20120 133 365
- KR-A- 20130 067 887
- US-A1- 2009 160 793
- US-A1- 2009 300 554
- US-A1- 2010 017 710
- US-A1- 2011 119 624
- US-A1- 2012 274 662

## Description

### Technical Field

The present invention relates to a technique for playing back contents, and more particularly to an apparatus and method for playing back a plurality of contents.

### Background Art

In general, mobile devices, such as smartphones and the like, play back one of contents, such as videos and the like, at a time due to limited performance. However, the recent change in decoding of contents such as videos not only from software but from hardware allows a plurality of contents to be played back at a time in mobile devices.

WO 2013/035725 discloses a method for controlling a user interface device to which a user can perform an input by means of the user touching a screen with a finger and that displays a plurality of objects on the screen. In the method, when the user touches the screen with the finger at the display position of one of the plurality of objects, the object is selected as a zoom subject image. When the degree of contact of the finger to the screen is greater than a predetermined threshold, the enlargement rate or the speed of change thereof of the zoom subject image is determined on the basis of the degree of contact, and the zoom subject image is enlarged on the screen on the basis of the determined enlargement rate or speed of change. US 2009/300554 discloses a method of controlling a user interface device for displaying on a display screen a plurality of objects, and for enabling a user to perform an input action by touching the display screen with the user's finger. This method includes: upon the user's touch to the display screen at a region of one of the plurality of objects being displayed, selecting the one object as a zoom target; upon an event occurring in which an intensity of the finger's touch on the display screen exceeds a predetermined threshold, determining a magnification ratio of the zoom target or a change rate of the magnification ratio, based on the intensity of the finger's touch; and zooming in the zoom target on the display screen with the determined magnification ratio or the determined change rate.

However, a user interface for playback of the plurality of contents is unavailable, which makes it difficult to provide the plurality of contents in a mobile device at a time.

### Disclosure

### Technical Problem

It is therefore an object of the present invention to provide a content playback apparatus which is capable of efficiently displaying a plurality of contents on a limited screen.

### Technical Solution

To achieve the above object, an aspect of the present invention provides a content playback apparatus including: a touch screen configured to display one or more pieces of content and to sense user's touch input for a specific piece of content; a memory configured to store instructions to display the one or more pieces of content; and a processor configured to control the one or more pieces of content to be displayed on the touch screen according to the instructions, wherein the instructions include: an instruction to perform a step of displaying the one or more pieces of content in a predetermined size; and an instruction to perform, when the user's touch input for the specific piece of content is detected, a step of moving the specific piece of content and magnifying the size of the specific piece of content according to the user's touch input to display the specific piece of content on the touch screen.

The step of moving the specific piece of content and magnifying the size of the specific piece of content according to the user's touch input to display the specific piece of content on the touch screen includes: a step of displaying, when a dragging of the user's touch input forms a closed figure, the specific piece of content to correspond to a size and position of the closed figure, the figure formed by a single closed curve of intersecting path lines formed according to the dragging of the user's touch input.

The step of displaying the specific piece of content to correspond to a size and position of the closed figure may include: a step of displaying the specific piece of content to correspond to a size and position according to one or more of rectangles circumscribing and inscribing the closed figure.

Another aspect of the present invention provides a content playback method of a content playback apparatus including a touch screen, including: a step of displaying one or more pieces of content in a predetermined size; and a step of moving a specific piece of content and magnifying the size of the specific piece of content according to a user's touch input to display the specific piece of content on the touch screen.

The step of moving the specific piece of content and magnifying the size of the specific piece of content according to the user's touch input to display the specific piece of content on the touch screen includes: a step of displaying, when a dragging of the user's touch input forms a closed figure, the specific piece of content to correspond to a size and position of the closed figure, the figure formed by a single closed curve of intersecting path lines formed according to the dragging of the user's touch input.

The step of displaying the specific piece of content
to correspond to a size and position of the closed figure may include: a step of displaying the specific piece of content to correspond to a size and position according to one or more of rectangles circumscribing and inscribing the closed figure.

### Advantageous Effects

As described above, according to the present invention, it is possible to provide a device including a touch screen, which is capable of allowing a user to easily arrange and display a plurality of contents on a screen according to intention of the user.

In addition, according to the present invention, it is possible for a user to control playback of contents shared by means of a content playback apparatus through an external device.

### Description of Drawings

Fig. 1 is a block diagram illustrating a content playback apparatus.
Fig. 2 is a view showing a screen on which a plurality of contents is played back through a user interface by a content playback apparatus.
Fig. 3 is a view showing a screen on which a plurality of contents is played back through a user interface by a content playback apparatus, in accordance with a second embodiment.
Fig. 4 is a flow chart illustrating a process of the content playback apparatus to play back the contents.

### Mode for Invention

The present invention can be modified in various ways and practiced with many embodiments. Hereinafter, some embodiments of the present invention will be described in detail with reference to the drawings. However, the present invention is not limited to the disclosed embodiments and it is to be understood that modifications, equivalents and substitutes thereof may be made and fall within the scope of the invention set forth in the claims.

In the specification, the phase of "transmitting a signal from one element to another" refers to not only transmitting the signal through direction connection from the one element to the another element but also transmitting the signal via still another element between the one element and the another element, unless stated otherwise.

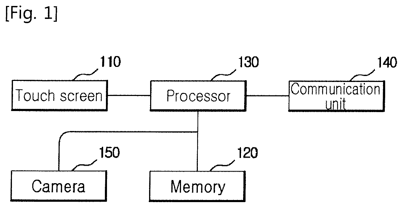

Fig. 1 is a block diagram illustrating a content playback apparatus.

Referring to Fig. 1, a content playback apparatus includes a touch screen 110, a memory 120, a processor 130, a communication unit 140 and a camera 150.

The touch screen 110 displays images received from the processor 130. The touch screen 110 can receive a touch input from a user through a finger or pen which touches on the touch screen 110, and can generate input information based on the received touch input. In this case, the touch input may include one or more of an input from the user which touches on the touch screen 110, an input of release of the finger or pen from the touch screen, a dragging of movement of the finger or pen on the touch screen 110 in touch with touch screen 100, and a touch pressure. The input information is information indicating the above-mentioned inputs. The touch screen 110 transmits the input information to the processor 130.

The memory 120 stores one or more contents and a program including a user interface and instructions for playbacks of the contents.

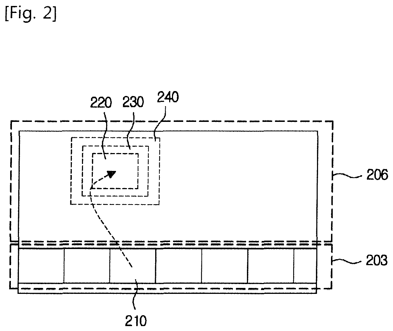

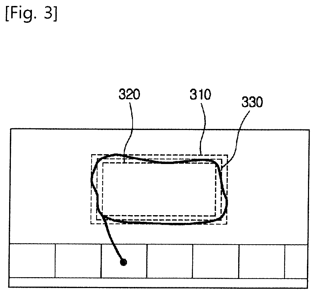

The processor 130 generates a content such as an image to be played back through the user interface, according to an instruction stored in the memory 120, and transmits it to the touch screen 110. A process of the processor 130 to generate the image through the user interface and display the image on the touch screen 110 is obvious to those skilled in the art and, therefore, explanation of which is omitted for the purpose of brevity. The user interface includes a thumbnail image display area in which contents being played back are displayed as thumbnail images, and a main area in which contents are displayed at positions and sizes set by the user. The main area may be the entire area of the touch screen 110 including the thumbnail image display area. In this case, when the user touches one of the contents displayed as the thumbnail images, drags it into the main area, and holds the touching, the processor 130 magnifies the content depending on a touch hold time. Accordingly, the content playback apparatus makes it possible for a user to easily adjust a position and size at which a content is played back, through a touch input. A process of adjusting a position and size at which a content is played back through the user interface will be described in detail later with reference to Figs. 2 and 3.

The processor 130 can also generate a transmission image to be transmitted to another device through the communication unit 140. For example, the processor 130 can generate a transmission image (a first content) to be played back on the entire screen. The processor 130 can transmit the transmission image to another device through the communication unit 140. In this case, the another device may be a mobile device or a device such as a television which is connected to the communication unit 140 via a predetermined communication protocol and can receive and display the transmission image.

The communication unit 140 is connected to another device and transmits a transmission image. In addition, the communication unit 140 can receive a content from another device and transmit it to the processor 130. In this case, the processor 130 can store the content in the memory 120 and display it on the touch screen 110 directly according to a playback instruction through the user interface. In addition, the communication unit 140 may include a plurality of communication modules of schemes known in the art.

The camera 150 can pick up an image of external environments to generate a content. The camera 150 can transmit the generated content to the processor 130. The processor 130 can store the content in the memory 120 and play back it. In addition, the processor 130 can display the content generated by the camera 150 on the touch screen 110 directly through the user interface.

Fig. 2 is a view showing a screen on which a plurality of contents is played back through a user interface by a content playback apparatus.

Referring to Fig. 2, the user interface includes a thumbnail image display area 203 and a main area 206. In this case, the main area 206 may become the entire area of the touch screen 110 including the thumbnail image display area 203. That is, the entire thumbnail image display area 203 or a background area may be used as the main area in which contents are displayed.

At this time, a plurality of contents may be played back as thumbnail images in the thumbnail image display area 203. When the processor 130 receives an input of touching one of the contents and dragging it to a point in the main area 206 from a user, the processor 130 moves the content to the point. If the dragging by the user is finished and a finger or pen of the user remains in touch with the content, the processor 130 magnifies the size of the content with a predetermined magnification in every predetermined unit time until the touch is ended. For example, after moving a content (e.g., a thumbnail image 210) to a point 220 according to an input from the user, the processor 130 magnifies the thumbnail image 210 to a size indicated by reference numeral 230 for a touch hold time. If the touch input from the user still remains maintained, the processor 130 magnifies the content 210 to a size indicated by reference numeral 240. When the touch input from the user is terminated, the processor 130 ceases to change the size of the content 210. Therefore, the content playback apparatus can set positions and sizes at which contents displayed as thumbnail images are played back, according to touch, drag and touch release inputs from a user. Therefore, even when it is a device, such as a mobile device, having a small screen, the content playback apparatus allows a user to set positions and sizes at which contents are played back, without a small button which is hard to be pressed. Thus, if the user wishes to display a plurality of contents on the main area 206, the user can cause the content playback apparatus to play back and display the plurality of contents through user inputs including touch, drag and touch release for thumbnail images.

Although it has been illustrated that the sizes at which the above-described contents are determined depending on the touch input hold time, the sizes may be determined according to a touch pressure by a user depending on an implementation method.

For example, the processor 130 can magnify a size at which a content is played back, with increase in a touch pressure. Therefore, a user can adjust the size without waiting magnification of the size after drag termination. In addition, if a pressure according to a touch pressure exceeds a predetermined value, the processor 130 can gradually magnify the size at which the content is played back. Therefore, even when the user stops the dragging for a minute in order to designate a position at which the content is played back, the size at which the content is played back, and further, even when the user stops the dragging for a minute in order to grasp a position at which the content is played back, it is possible to prevent the processor 130 from entering a process of adjusting the size at which the content is played back.

Fig, 3 is a view showing a screen on which a plurality of contents is played back through a user interface by a content playback apparatus, in accordance with a second embodiment.

Referring to Fig. 3, the user interface includes according to the present invention a thumbnail image display area 203 and a main area 206.

In this case, a plurality of contents can be played back as thumbnail images in the thumbnail image display area 203. When the processor 130 receives an input of touching one 210 of the contents and dragging it into the main area 206 from a user, the processor 130 displays a path according to the dragging, as a line (hereinafter referred to as a path line). Thereafter, when path lines according to the dragging form a closed figure, the processor sets a size at which a content is played back, to a size of a rectangle 310 circumscribing the closed figure formed by the path lines, and displays the content at a position of the rectangle.

Of course, depending on an implementation method, the processor 130 may display the content at a size and position according to a rectangle 320 inscribing the figure formed by the single closed curve. Alternatively, the processor 130 may set a content size and position according to a rectangle 330 formed by a set of points having the same distance from matched sides when sides of the rectangle 310 circumscribing the figure formed by the single closed curve match in one-to-one correspondence with sides of the rectangle 320 inscribing the figure formed by the single closed curve. For example, the processor 130 may match the upper side of the rectangle 310 circumscribing the figure with the upper side of the rectangle 320 inscribing the figure and calculate points having the same distance from the upper sides. In addition, the processor 130 may calculate points having the same distance for left sides, right sides and lower sides of the rectangle 310 and rectangle 320, according to the above-described process. The processor 130 can set sizes and positions of contents through the rectangle 330 formed by the same distance points.

Accordingly, the content playback apparatus according to the second embodiment of the present invention can set sizes and positions at which contents are displayed, through a dragging from a user.

The contents played back and displayed according to the above-described methods (Figs. 2 and 3) of the present disclosure can be changed in size and position or changed in size at the same position through the user inputs including the touch, dragging and touch release, in the same way.

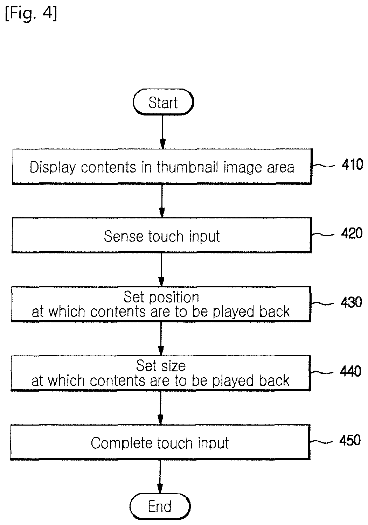

Fig. 4 is a flow chart illustrating a process of the content playback apparatus to play back the contents. The following process is a process performed by functional units included in the content playback apparatus. However, for the purpose of brevity of description, the description will be given with the content playback apparatus as a subject.

Referring to Fig. 4, at Step 410, the content playback apparatus displays one or more contents in the thumbnail image area 203. At this time, the contents may be contents received from an external device through the communication unit 140, contents generated by the camera 150, and the like.

At Step 420, the contents playback apparatus senses a touch input on the touch screen 110 from a user. In this case, the touch input may be inputs, such as touch, drag and touch release, from the user, which are known in the art.

At Step 430, the content playback apparatus sets a position at which a content corresponding to a thumbnail image first touched by the user is played back. For example, the content playback apparatus can move the content positioned at the point first touched by the user, according to a dragging. When the dragging is stopped (i.e., a finger or pen pauses under a touched state, the content playback apparatus can set the point at which the dragging is stopped, to a position at which the content is to be played back.

At Step 440, the content playback apparatus sets a size at which the content is to be played back, according to the touch input. For example, the content playback apparatus magnifies the size of the content for a touch hold time after the dragging is stopped, ceases to magnify the content size if the touch release occurs during the magnification of the content size, and sets the magnified size of the thumbnail image to a size at which the content is to be played back.

Although it has been illustrated that the size at which the content is to be played back is set depending on a touch hold time at Step 440, conditions of setting the size at which the content is to be displayed may be changed depending on an implementation method.

For example, the content playback apparatus may change the content size in proportion to a pressure according to the touch input at Step 440. Alternatively, if the touch pressure exceeds a predetermined value, the content playback apparatus may change the size at which the content is to be displayed, by a predetermined magnification in every unit time.

According to the Present invention, Step 440 is a step in which the content playback apparatus sets a size and position at which the content is to be played back using a path line formed by the user dragging, as described above with reference to Fig. 3.

When the touch input is completed at Step 450, the content playback apparatus completes the control for content playback and plays back the contents according to the control.

If one or more contents are already being played back in the main area, only Steps 420, 430, 440 and 450 except Step 410 in the flow chart of Fig. 4 may be performed in order to change the sizes and positions at which the contents are being played back. That is, the contents being already played back can be changed in position and size by sensing a touch input to select a content to be changed in position and size, among the contents being already played back, at Step 420, setting a playback position at Step 430, setting a playback size at Step 440, and completing the touch input at Step 450. In addition, if only the playback sizes of the contents being already played back are intended to be adjusted, the contents can be changed in size by sensing a touch input to select a content to be changed in size, among the contents being already played back, at Step 420, setting a playback size at Step 440 in the above-described way if a touch input for playback size setting is sensed without a position change input for Step 430, for example, if a touch lasts for a certain time or a touch pressure is sensed to exceed a predetermined value without any drag after the touch input at Step 420, and completing the touch input at Step 450.

## Claims

1. A content playback apparatus, comprising:
a touch screen (110) configured to display one or more pieces of content and to sense a user's touch input for a specific piece of content;
a memory (120) configured to store instructions to display the one or more pieces of content; and
a processor (130) configured to control the one or more pieces of content to be displayed on the touch screen (110) according to the instructions,
wherein the instructions include:
an instruction to perform a step of displaying the one or more pieces of content in a predetermined size; and
an instruction to perform, when the user's touch input for the specific piece of content is detected, a step of moving the specific piece of content and magnifying the size of the specific piece of content according to the user's touch input to display the specific piece of content on the touch screen,
wherein the step of moving the specific piece of content and magnifying the size of the specific piece of content according to the user's touch input to display the specific piece of content on the touch screen (110) includes:
a step of displaying, when a dragging of the user's touch input forms a closed figure, the specific piece of content to correspond to a size and position of the closed figure, the figure formed by a single closed curve of intersecting path lines formed according to the dragging of the user's touch input.

2. The content playback apparatus according to claim 1, wherein the step of displaying the specific piece of content to correspond to a size and position of the closed figure includes: displaying the specific piece of content to correspond to a size and position of one or more of rectangles circumscribing (310) and inscribing (320) the closed figure.

3. A content playback method of a content playback apparatus including a touch screen (110), comprising:
a step of displaying one or more pieces of content in a predetermined size; and
a step of moving a specific piece of content and magnifying the size of the specific piece of content according to a user's touch input to display the specific piece of content on the touch screen (110),
wherein the step of moving the specific piece of content and magnifying the size of the specific piece of content according to the user's touch input to display the specific piece of content on the touch screen (110) includes:
a step of displaying, when a dragging of the user's touch input forms a closed figure, the specific piece of content to correspond to a size and position of the closed figure, the figure formed by a single closed curve of intersecting path lines formed according to the dragging of the user's touch input.

4. The content playback method according to claim 3, wherein the step of displaying the specific piece of content to correspond to a size and position of the closed figure includes: displaying the specific piece of content to correspond to a size and position of one or more of rectangles circumscribing (310) and inscribing (320) the closed figure.

## Patentansprüche

1. Inhaltswiedergabevorrichtung, umfassend:
einen Berührungsbildschirm (110), der dazu ausgestaltet ist, ein oder mehrere Inhaltsstücke anzuzeigen und eine Berührungseingabe eines Benutzers für ein spezifisches Inhaltsstück zu erfassen;
einen Speicher (120), der dazu ausgestaltet ist, Anweisungen zu speichern, um das eine oder die mehreren Inhaltsstücke anzuzeigen; und
einen Prozessor (130), der dazu ausgestaltet ist, das eine oder die mehreren Inhaltsstücke, die auf dem Berührungsbildschirm (110) anzuzeigen sind, gemäß den Anweisungen zu steuern,
wobei die Anweisungen Folgendes umfassen:
eine Anweisung, um einen Schritt zum Anzeigen des einen oder der mehreren Inhaltsstücke in einer vorbestimmten Größe durchzuführen; und
eine Anweisung, um, wenn die Berührungseingabe des Benutzers für das spezifische Inhaltsstück erfasst wird, einen Schritt zum Bewegen des spezifischen Inhaltsstücks und Vergrößern der Größe des spezifischen Inhaltsstücks gemäß der Berührungseingabe des Benutzers durchzuführen, um das spezifischen Inhaltsstück auf dem Berührungsbildschirm anzuzeigen,
wobei der Schritt zum Bewegen des spezifischen Inhaltsstücks und Vergrößern der Größe des spezifischen Inhaltsstücks gemäß der Berührungseingabe des Benutzers, um das spezifische Inhaltsstück auf dem Berührungsbildschirm (110) anzuzeigen, Folgendes umfasst:
einen Schritt zum Anzeigen, wenn ein Ziehen der Berührungseingabe des Benutzers eine geschlossene Figur bildet, des spezifischen Inhaltsstücks, um einer Größe und Position der geschlossenen Figur zu entsprechen, wobei die Figur, die durch eine einzelne geschlossene Kurve von sich schneidenden Pfadlinien gebildet ist, gemäß dem Ziehen der Berührungseingabe des Benutzers gebildet wird.

2. Inhaltswiedergabevorrichtung nach Anspruch 1, wobei der Schritt zum Anzeigen des spezifischen Inhaltsstücks, um einer Größe und Position der geschlossenen Figur zu entsprechen, Folgendes umfasst: Anzeigen des spezifischen Inhaltsstücks, um einer Größe und Position von einem oder mehreren Rechtecken zu entsprechen, welche die geschlossene Figur umbeschreiben (310) oder einbeschreiben (320).

3. Inhaltswiedergabeverfahren einer Inhaltswiedergabevorrichtung, die einen Berührungsbildschirm (110) aufweist, umfassend:
einen Schritt zum Anzeigen eines oder mehrerer Inhaltsstücke in einer vorbestimmten Größe und einen Schritt zum Bewegen eines spezifischen Inhaltsstücks und Vergrößern der Größe des spezifischen Inhaltsstücks gemäß einer Berührungseingabe eines Benutzers, um das spezifische Inhaltsstück auf dem Berührungsbildschirm (110) anzuzeigen,
wobei der Schritt zum Bewegen des spezifischen Inhaltsstücks und Vergrößern der Größe des spezifischen Inhaltsstücks gemäß der Berührungseingabe des Benutzers, um das spezifische Inhaltsstück auf dem Berührungsbildschirm (110) anzuzeigen, Folgendes umfasst:
einen Schritt zum Anzeigen, wenn ein Ziehen der Berührungseingabe des Benutzers eine geschlossene Figur bildet, des spezifischen Inhaltsstücks, um einer Größe und Position der geschlossenen Figur zu entsprechen,
wobei die Figur, die durch eine einzelne geschlossene Kurve von sich schneidenden Pfadlinien gebildet ist, gemäß dem Ziehen der Berührungseingabe des Benutzers gebildet wird.

4. Inhaltswiedergabeverfahren nach Anspruch 3, wobei der Schritt zum Anzeigen des spezifischen Inhaltsstücks, um einer Größe und Position der geschlossenen Figur zu entsprechen, Folgendes umfasst: Anzeigen des spezifischen Inhaltsstücks, um einer Größe und Position von einem oder mehreren Rechtecken zu entsprechen, welche die geschlossene Figur umbeschreiben (310) oder einbeschreiben (320).

## Revendications

1. Appareil de lecture de contenu, comprenant :
un écran tactile (110) configuré pour afficher un ou plusieurs éléments de contenu et pour détecter une entrée tactile d'un utilisateur pour un élément de contenu spécifique ;
une mémoire (120) configurée pour stocker des instructions pour afficher les un ou plusieurs éléments de contenu ; et
un processeur (130) configuré pour commander les un ou plusieurs éléments de contenu à afficher sur l'écran tactile (110) selon les instructions,
dans lequel les instructions incluent :
une instruction pour réaliser une étape d'affichage des un ou plusieurs éléments de contenu dans une taille prédéterminée ; et
une instruction pour réaliser, lorsque l'entrée tactile de l'utilisateur pour l'élément de contenu spécifique est détectée, une étape de déplacement de l'élément de contenu spécifique et de grossissement de la taille de l'élément de contenu spécifique selon l'entrée tactile de l'utilisateur pour afficher l'élément de contenu spécifique sur l'écran tactile,
dans lequel l'étape de déplacement de l'élément de contenu spécifique et de grossissement de la taille de l'élément de contenu spécifique selon l'entrée tactile de l'utilisateur pour afficher l'élément de contenu spécifique sur l'écran tactile (110) inclut :
une étape d'affichage, lorsqu'un glissement de l'entrée tactile de l'utilisateur forme une figure fermée, de l'élément de contenu spécifique pour correspondre à une taille et une position de la figure fermée, la figure étant formée par une courbe fermée unique de lignes de chemin de croisement formées selon le glissement de l'entrée tactile de l'utilisateur.

2. Appareil de lecture de contenu selon la revendication 1, dans lequel l'étape d'affichage de l'élément de contenu spécifique pour correspondre à une taille et une position de la figure fermée inclut : l'affichage de l'élément de contenu spécifique pour correspondre à une taille et une position d'un ou de plusieurs rectangles circonscrivant (310) et inscrivant (320) la figure fermée.

3. Procédé de lecture de contenu d'un appareil de lecture de contenu incluant un écran tactile (110), comprenant :
une étape d'affichage d'un ou de plusieurs éléments de contenu dans une taille prédéterminée ; et
une étape de déplacement d'un élément de contenu spécifique et de grossissement de la taille de l'élément de contenu spécifique selon une entrée tactile d'un utilisateur pour afficher l'élément de contenu spécifique sur l'écran tactile (110),
dans lequel l'étape de déplacement de l'élément de contenu spécifique et de grossissement de la taille de l'élément de contenu spécifique selon l'entrée tactile de l'utilisateur pour afficher l'élément de contenu spécifique sur l'écran tactile (110) inclut :
une étape d'affichage, lorsqu'un glissement de l'entrée tactile de l'utilisateur forme une figure fermée, de l'élément de contenu spécifique pour correspondre à une taille et une position de la figure fermée, la figure étant formée par une courbe fermée unique de lignes de chemin de croisement formées selon le glissement de l'entrée tactile de l'utilisateur.

4. Procédé de lecture de contenu selon la revendication 3, dans lequel l'étape d'affichage de l'élément de contenu spécifique pour correspondre à une taille et une position de la figure fermée inclut : l'affichage de l'élément de contenu spécifique pour correspondre à une taille et une position d'un ou de plusieurs rectangles circonscrivant (310) et inscrivant (320) la figure fermée.
